Europäisches Patentamt

European Patent Office

Office européen des brevets

(19)

(11) Veröffentlichungsnummer: **0 028 307**
**B1**

## (12) EUROPÄISCHE PATENTSCHRIFT

(45) Veröffentlichungstag der Patentschrift: **18.01.84**

(21) Anmeldenummer: **80105647.4**

(22) Anmeldetag: **19.09.80**

(51) Int. Cl.³: **H 04 J 3/04, H 04 Q 11/04, H 03 H 19/00**

(54) Schaltungsanordnung für einen Analogvergleicher.

(30) Priorität: **26.09.79 DE 2938947**

(43) Veröffentlichungstag der Anmeldung:
**13.05.81 Patentblatt 81/19**

(45) Bekanntmachung des Hinweises auf die Patenterteilung:
**18.01.84 Patentblatt 84/3**

(84) Benannte Vertragsstaaten:
**AT BE CH DE FR GB IT LI LU NL SE**

(56) Entgegenhaltungen:
**DE - A - 2 708 605**
**US - A - 3 735 392**
**US - A - 3 819 864**

**IEEE INTERNATIONAL SOLID STATE CIRCUITS
CONFERENCE, Band XXII 14. Februar 1979 New
York D. HERBST et al. "MOS Switched-Capacitor
Filters" Seiten 74, 75, 281, 282**

**PROCEEDINGS OF THE I.E.E.-G. Band 127, Nr. 2,
April 1980 G.S. MOSCHYTZ et al. "Transmission
Matrix of Switched-Capacitor Ladder Networks:
Application in Active-Filter Design" Seiten 87 bis
98**

(73) Patentinhaber: **SIEMENS AKTIENGESELLSCHAFT
Berlin und München Wittelsbacherplatz 2
D-8000 München 2 (DE)**

(72) Erfinder: **Lechner, Robert, Dipl.-Ing.
Haidfeldstrasse 5
D-8156 Otterfing (DE)**
Erfinder: **Wintzer, Klaus
Willibaldstrasse 16 f
D-8000 München 21 (DE)**

EP 0 028 307 B1

Schaltungsanordnung für einen Analogvergleicher

Die Erfindung betrifft eine Schaltungsanordnung für die Abtastung von Analogsignalen und die Speicherung der jeweiligen Abtastproben in einem Speicherkondensator, welche dem Eingangskreis eines Analogvergleichers zugeführt sind, der den gespeicherten Analogwert mit einem Vergleichssignal vergleicht, wobei das Analogsignal jeweils dem Ausgangssignal eines integrierten Ausgangsverstärkers entspricht, der vorzugsweise die Ausgangsstufe eines die Sprachsignale eines Fernsprechkanals in Fernsprechanlagen bandbegrenzenden Filters darstellt, insbesondere als Bestandteil eines nach der Iterativmethode arbeitenden Analog-Digital Wandlers.

Eine derartige z.B. aus der DE—A1 2 708 605 bekannte Anordnung kann bei der in Fernsprechanlagen angewendeten Zeitmultiplextechnik, bei der bekanntlich eine zeitliche Verschachtelung mehrerer Sprachsignale auf einem Übertragungskanal erfolgt, eingesetzt werden. Die von elektroakustischen bzw. elektrooptischen Wandlern gelieferten und Analogsignale darstellenden Sprachsignale werden dabei bandbegrenzt, abgetastet und codiert. Aus einem Analogsignal entsteht somit beispielsweise ein binär codiertes Digitalsignal, das über entsprechende Übertragungsstrecken einer für die Rückgewinnung der ursprünglichen Signalart geeigneten Empfangsschaltung zugeführt wird.

Die Codierung eines Sprachsignals kann nach dem sogenannten Iterativprinzip vorgenommen werden. Hierzu wird der Ausgang eines Verstärkers, der die Ausgangsstufe eines den Frequenzbereich der Sprachsignale begrenzenden Filters sein kann, über einen periodisch betätigten Abtastschalter mit einem den jeweiligen Analogwert speichernden Speicherkondensator verbunden. Dieser Speicherkondensator wird an den einen Eingang eines Komparators gelegt, dessen anderer Eingang das jeweilige Vergleichssignal erhält. Dieses Vergleichssignal wird bei der Anwendung für einen Analog-Digital-Wandler dadurch erzeugt, dass zunächst eine digitale Ziffer bereitgestellt wird, die in die zugehörige analoge Spannung transferiert wird. Diese intern erzeugte analoge Spannung wird mit dem durch die Abtastung erhaltenen Analogwert verglichen. Der Komparator stellt nun fest, ob der intern erzeugte Analogwert grösser oder kleiner als der in Form der Abtastprobe gespeicherte Analogwert ist. Entsprechend wird die digitale Ziffer geändert und nach der Umwandlung dieser Ziffer in den entsprechenden Analogwert erneut der Vergleich durchgeführt. Dies führt dann zu einer weiteren Änderung. Wird eine derartige Korrektur mehrmals nacheinander vorgenommen, so ergibt sich dann eine genügend grosse Genauigkeit zwischen dem umzuwandelnden Analogwert der in der geschilderten Weise intern erzeugten Analogspannung. Die zugehörige Ziffer stellt dann den ins digitale transferierten Wert der im Speicherkondensator abgespeicherten Abtastprobe dar. Damit kein falsches Codierergebnis entsteht, darf sich die Spannung am Speicherkondensator während der Dauer des jeweiligen Codiervorganges nicht verändern. Eine derartige Veränderung könnte sich aufgrund des OffsetFehlers des genannten Ausgangsverstärkers ergeben. Um den Einfluss dieses Offset-Fehlers auszuschalten, ist für jeden, die jeweilige Abtastprobe entnehmenden und speichernden Eingangskreis ein Sperrglied für den störenden Gleichspannungsanteil vorzusehen. Gleichzeitig ist es wünschenswert, eingekoppelte Signalspannungen unterhalb des Sprachbandes, wie sie z.B. eingekoppelte 50 Hz-Längsspannungen darstellen, zu dämpfen.

Werden die Abtastproben von mehreren, z.B. jeweils einem Sprachkanal zugeordneten Ausgangsverstärkern nacheinander ohne zeitliche Überlappung von ein und demselben Speicherkondensator abgespeichert, so kann bei dem geschilderten Anwendungsfall der digitalen Sprachsignalübertragung die Nebensprechdämpfung so weit vermindert werden, dass das Nebensprechen störend wirkt. Bei der Anwendung von integrierten Abtastschaltern muss der Einschaltwiderstand einen solch grossen Wert aufweisen, dass die Ausgänge der, jeweils die Ausgangsstufe eines Filters bildenden Verstärker im Zeitpunkt des Schliessen des Abtastschalters nicht übersteuert werden. Die sich aus dem genannten Widerstandswert und der Grösse des Speicherkondensators ergebende Zeitkonstante kann dann so gross werden, dass aufgrund einer verbleibenden geringen Restladung ein sogenanntes Nebensprechen bewirkt wird.

Bei einer bekannten derartigen Schaltungsanordnung (US—A—3 735 392) is zwar Sorge dafür getragen, daß das endgültige Digitalsignal als Ergebnis der Analog-Digital-Wandlung relativ schnell vorliegt, Vorkehrungen, die direkt auf die Verringerung des Nebensprechens zwischen benachbarten Signalkanälen zielen, sind hier jedoch nicht getroffen. Dasselbe gilt für eine ebenfalls mehrere Signalkanäle bedienende, eine Analog-Digital-Wandlung bewirkende Anordnung (US—A— 3 819 864), bei der die Maßnahmen zur Unterdrückung schädlicher Einflüsse darauft gerichtet sind, Auswirkungen der Offset-Spannungen der den einzelnen Kanälen individuell zugeordneten Verstärker bzw. eines allen Kanälen gemeinsamen Verstärkers zu verhindern.

Es ist die Aufgabe der Erfindung, die genannten nachteiligen Auswirkungen zu vermeiden und alle erforderlichen Massnahmen bei geringstem Schaltungsaufwand vorzunehmen.

Dies wird bei einer Schaltungsanordnung der eingangs genannten Art dadurch erreicht, dass das Ausgangssignal eines jeden Ausgangsverstärkers unter Zwischenschaltung eines Kondensators, der ein Element eines Siebgliedes mit Hochpasscharakteristik bildet, durch ein elektronisches Auswahlschaltglied in zyklischer Folge und zeitlich nacheinander abgetastet wird, dass der zugehörige Widerstand eines jeden Siebgliedes durch eine gemeinsame, welhe aus einem Kondensator und einem diesen Kondensator mindestens unmittelbar vor jeder nachfolgenden Abtaststellung kurzzeitig überbrückenden elektronischen Schalters besteht, im Ausgang des Auswahlschaltgliedes eingefügte Anordnung nachgebildet ist, und dass dieser Kondensator gleichzeitig den Speicherkondensator für die jeweiligen Abtastproben darstellt.

Erfindungsgemäss ist dem Ausgang eines jeden Ausgangsverstärkers ein Kondensator nachgeschaltet, durch den einmal der durch den Offset-Fehler bedingte Gleichspannungsanteil abgetrennt wird und der zum anderen gleichzeitig ein Element eines Filters bildet, das Frequenzen unterhalb des Sprachbandes dämpft. Der zur Bildung des Filtergliedes notwendige Widerstandsanteil ist nun nicht für jeden einzelnen Ausgang vorhanden,, sondern er ist als gemeinsames Element im Ausgang eines Auswahlschaltgliedes in Form einer aus einem Kondensator und einem diesen Kondensator zu bestimmten Zeitpunkten überbrückenden Schalter bestehenden Nachbildung angeordnet. Durch die Tatsache, dass das jeweils gebildete Siebglied nicht kontinuierlich sondern jeweils nur während der für jeden Ausgang zur Verfügung stehenden Abtastzeitspanne wirksam geschaltet ist, kann der zur Erhaltung einer geforderten Zeitkonstante notwendige Kapazitätswert demgegenüber verringert werden. Es ergibt sich nämlich bei der vorgenommenen zyklischen Wirksamschaltung jeweils eine virtuelle Zeitkonstante, die im Hinblick auf die Siebwirkung derjenigen entspricht, die sich bei kontinuierlicher Anschaltung für einen Kondensator mit n-facher größeren Kapazitätswert bei insgesamt n abzutastenden Ausgangsverstärkern ergibt.

Die Schalter-Kondensator-Kombination ist als Äquivalent zu einem Widerstand für sich bekannt, wobei der Widerstandswert von dem Produkt aus Kapazitätswert und der Tastfrequenz für den Schalter bestimmt wird. Da erfindungsgemäß der eine integrierte Einheit darstellende Schalter den Kondensator jeweils vor Erreichen der nächsten Abtaststellung kurzschließt, ist, da dieser Kondensator gleichzeitig den Speicherkondensator bildet, bei der Abtastung von einzelnen Sprachkanälen ein störendes Nebensprechen ausgeschlossen. Durch die erfindungsgemäß eingestzte Nachbildung werden also gleichzeitig mehrere, insbesondere im Zusammenhang mit der Abtastung von Sprachkanälen erforderliche Funktionen erfüllt.

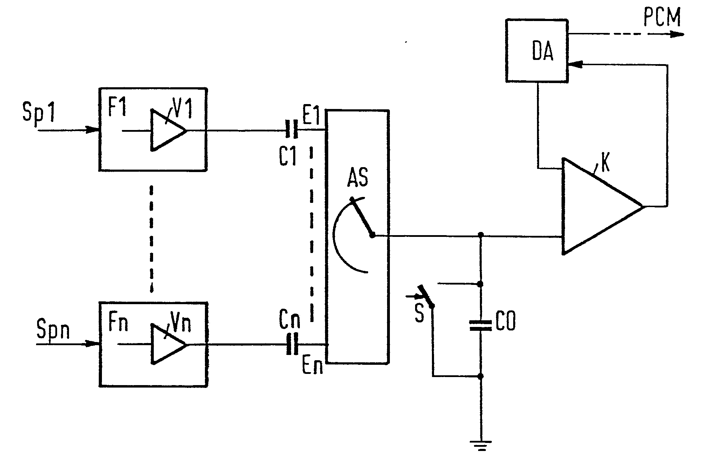

In der Zeichnung ist ein Ausführungsbeispiel der Erfindung in dem zu ihrem Verständnis erforderlichen Umfang gezeigt.

Es ist eine Einrichtung für die digitale Fernsprech-Vermittlungstechnik dargestellt, durch die auf den Sprachkanälen Sp1 bis Spn auftretenden und beispielsweise von elektroakustischen Wandlern gelieferten Sprachsignale in beispielsweise nach der Zeitmultiplextechnik übertragbare digitale Signale umgewandelt werden. Sie können dann in Form von Pulscode modulierten Signalen ausgesendet werden.

Es wird davon ausgegangen, daß der dargestellten Einrichtung mindestens zwei Sprachkanäle zugeordnet sind. Für die einzelnen Sprachkanäle Sp1 bis Spn wird durch die ihnen individuell zugeordneten Filteranordnungen F1 bis Fn eine Begrenzung im Frequenzband vorgenommen. Dies ist erforderlich um bei Wahl einer sinnvollen Abtastfrequenz die Forderung des Abtastteorems, das nämlich die Abtastfrequenz mindestens doppelt so hoch ist wie die höchste im abzutastenden Signal vorkommende Frequenz, erfüllt.is. Die Abtastung der einzelnen Filterausgänge, die jeweils durch einen integrierten Ausgangsverstärker V1 bis Vn realisiert sein sollen, wird in einem vorgegebenen und durch die gewählte Abtastfrequenz bestimmten Zyklus durch ein elektronisches Auswahlschaltglied AS vorgenommen. In den einzelnen Abtaststellungen kann eine Abtastprobe des an den zugeordneten Eingängen E1 bis En über jeweils einen Kondensator C1 bis Cn anliegenden Ausgangssignals der jeweiligen Filteranordnung F1 bis Fn entnommen werden. Diese Abtastprobe wird dann in dem Speicherkondensator CO abgespeichert und dem einen Eingang eines Analogvergleichers K zugeführt.

Die Kondensatoren C1 bis Cn dienen einmal zur Abtrennung des durch den Offsetfehler der integrierten Verstärker V1 bis Vn ausgangsseitig entstehenden Gleichspannungsanteils und bilden gleichzeitig ein Element eines Hochpaßgliedes. Durch dieses Hochpaßglied sollen eingekoppelte Spannungen, die eine unterhalb des Sprachbandes liegende Frequenz aufweisen, gedämpft werden. Der zur Vervollständigung des Hochpaßgliedes notwendige Widerstand ist nun nicht individuell für jeden Eingang vorhanden, sondern er wird durch die aus dem Speicherkondensator CO und dem Schalter S bestehende Anordnung gebildet. Diese Anordnung stellt das Aquivalent zu dem entsprechenden Widerstand dar und ist allen Eingangsfiltern in Form des dadurch jeweils wirksam gebildeten Hochpaßgliedes gemeinsam zugeordnet.

Da jedes Hochpaßglied nicht kontinuierlich im Eingangskreis eines auswertenden Komperators liegt, sondern nur für diejenige Zeitspanne wirksam ist die für die Entnahme der jeweiligen Abtastprobe vorgegeben ist, ergibt sich als für die Siebwirkung maßgebende Zeitkonstante eine virtuelle Zeitkonstante für die ein um de Faktor 1 zu n verringerter Kapazitätswert für die jeweiligen Kondensatoren C1 bis Cn zugrundegelegt werden kann. Beträgt die Zeit, in der das Hochpaßglied jeweils wirksam geschaltet is nur einen Bruchteil der an sich möglichen Abfrageizitspanne, so kann der Kapazitätswert eines jeden derartigen Kondensators bei gleichem Siebfaktor noch weiter verringert werden. Dadurch ergibt sich die Möglichkeit, die einzelnen Kondensatoren nicht mehr in Form eines diskreten Bauelementes zu verwenden, sondern diese können gegebenenfalls einintegriert werden.

Der Kondensator CO des aus diesem Kondensator und dem Schalter S bestehenden Äquivalents für einen Widerstand dient als Speicherkondensator für die in der jeweiligen Abtaststellung entnommenen Abtastproben. Dieser Speicherkondensator wird durch den Schalter S, entladen, bevor die nächste Abtaststellung eingenommen wird. Der Schalter S stellt einen in integrierter Technik realisierten Schalter dar. Sein Einschaltwiderstand kann einen wesentlich geringeren Wert annehmen als der für das Auswahlschaltglied vorgegebene Einschaltwiderstand. Der Kondensator CO wird deshalb sehr rasch entladen. Es wird somit ausgeschlossen daß bei der Abtastung des jeweils nachfolgenden. Filterausganges eine Restladung bestehen bleibt. Diese Restladung könnte sich ohne den Einsatz des Schalters S in einem durch das Verhältnis des Speicherkondensators CO und des jeweiligen Kondensators des Hochpaßgliedes vorgegebenen Teilungsverhältnisses im Hinblick auf die sich einstellende Nebensprechdämpfung ungünstig auswirken. Durch die jeweilige Entladung des Speicherkondensators CO vermittels des Schalters S wird demnach eine derartige Auswirkung vermieden.

Wie bereits erwähnt wird der jeweils in dem Speicherkondensator abgespeicherte Analogwert dem einen Eingang eines Vergleichers K zugeführt. Der andere Eingang dieser Vergleichers erhält ein Analogsignal, das in dem erwähnten Anwendungsfall der Abtastung von Sprachkanälen in Fernsprechanlagen von einem Digital-Analog-Wandler DA geliefert wird. Dieser bildet in diesem Zusammenhang einen Bestandteil eines beispielsweise nach dem Iterativ-Prinzip arbeitenden Analog-Digital-Wandler. Dieses Prinzip, bei dem also jeweils eine Korrektur des einer intern bereitgestellten digitalen Ziffer entsprechenden Analogwertes vorgenommen wird, wurde bereits eingangs erläutert. Der Digital-Analog-Wandler DA, der also die digitale Ziffer bewertet und in eine analoge Information umsetzt, kann die Form einer sogenannten R-2-Netzwerkes aufweisen. Hat sich nach mehreren Vergleichszyklen eine genügend hohe Genauigkeit zwischen dem jeweils abgespeicherten Analogwert und der durch die Einrichtung DA jeweils intern erzeugten und dem anderen Eingang des Vergleichers zugeführten Analogspannung eingestellt so stellt dann die zugeordnete Ziffer den ins Digitale transferierten Wert der analogen Abtastprobe dar. Dieser kann dann beispielsweise in Form eines PCM-Signales über eine nicht dargestelltes und vermittlungstechnische Abläufe steuerndes Register ausgegeben werden. Nach dem Abschluß eines, jeden, aufgrund einer aufgenommen Abtastprobe eingeleiteten Codiervorganges wird der Speicherkondensator CO durch die Betätigung des Schalters S entladen und die Abtastprobe des jeweils nachfolgenden Eingangs E aufgenommen. Diese wird dann ebenfalls in der bereits geschilderten Weise in ein digitales Ausgangssignal umgewandelt.

**Patentanspruch**

Schaltungsanordnung für die Abtastung von Analogsignalen und die Speicherung der jeweiligen Abtastproben in einem Speicherkondensator (CO), welche dem Eingangskreis eines Analogvergleichers, (K) zugeführt sind, der den gespeicherten Analogwert mit einem Vergleichssignal vergleicht, wobei das Analogsignal jeweils dem Ausgangssignal eines integrierten Ausgangsverstärkers (V1 bis Vn) entspricht, der vorzugsweise die Ausgangsstufe eines die Sprachsignale eines Fernsprechkanals in Fernsprechanlagen bandbegrenzenden Filters darstellt, insbesondere als Bestandteil eines nach der Iterative-Methode arbeitenden Analog-Digital-Wandlers (DA), dadurchgekennzeichnet, daß das Ausgangssignal eines jeden Ausgangsverstärkers (V1 bis Vn) unter Zwischenschaltung eines Kondensators (C1 bis Cn), der ein Element eines Siebgliedes mit Hochpaßcharackteristik bildet, durch ein elektronisches Auswahlschaltglied (AS) in zyklischer Folge und zeitlich nacheinander abgetastet wird, daß der zugehörige Widerstand eines jeden Siebgliedes durch eine gemeinsame im Ausgang des Auswahlschaltgliedes (AS) eingefügte Anordnung nachgebildet ist, welche ause einem Kondensator (CO) und einem diesen Kondensator mindestens unmittelbar vor jeder nachfolgenden Abtaststellung kurzzeitig überbrückenden elektronischen Schalter (S) besteht, und daß dieser Kondensator (CO) gleichzeitig den Speicherkondensator für die jeweiligen Abtastproben darstellt.

**Claim**

A circuit arrangement for sampling analogue signals and storing respective samples in a storage capacitor (CO) which are supplied to the input circuits of an analogue comparator (IC) which compares the stored analogue value with a comparison signal, where the analogue signal corresponds to the output signal of an integrated output amplifier (V1 to Vn) which preferably represents the output stage of a filter which limits the band of the speech signals of a telephone channel in telephone systems, in particular as a component of an analogue-digital converter (DA) operating in accordance with the iterative method, characterised in that the output signals of each output amplifier (V1 to Vn) is sampled in a cyclic sequence consecutively in time by an electronic selector switching element (AS) interconnecting a capacitor (CI to Cn) which forms an element of a filter member exhibiting a high-pass filter characteristic, and that the assigned resistor of each filter member is reproduced by a common arrangement which is inserted in the output of the selector switching element (AS) and consists of a capacitor (CO) and an electronic switch (S) which at least temporarily bridges this capacitor directly before each following sampling position, and that this capacitor (CO) simultaneously represents the storage capacitor for the respective samples.

**Revendication**

Circuit pour l'échantillonnage de signaux analogiques et la mémorisation des échantillons respectifs dans un condensateur de mémorisation (CO), signaux qui sont appliqués au circuit d'entrée d'un comparateur analogique (K) qui compare la valeur analogique mémorisée avec un signal de comparaison, le signal analogique correspondant respectivement au signal de sortie d'un amplificateur de sortie intégré (V1 à Vn) qui constitue de préférence l'étage de sortie d'un filtre de limitation de bande des signaux vocaux d'un canal de téléphonie dans des installations de téléphonie, notamment en tant qu'èle m ent constitutif d'un convertisseur analogique-numérique (DA) opérant suivant la méthode itérative, caractérisé par le fait que le signal de sortie de chaque amplificateur de sortie (V1 à Vn) est échantillonné, suivant une séquence cyclique et de façon successive dans le temps, par un commutateur sélecteur électronique (AS), avec interposition d'une condensateur (C1 à Cn) qui constitue un élément d'un circuit de filtrage possédant une caractéristque passe-haut, que le résistance associée de chaque circuit de filtrage est simulée par un dispositif commun qui est inséré dans la sortie du commutateur sélecteur (AS) et qui est constitué par un condensateur (CO) et un commutateur électronique (S) shuntant temporairement ce condensateur, au moins immédiatement avent chaque position d'échantillonnage suivante, et que ce condensateur (CO) constitue simultanément le condensateur de mémorisation pour les échantillons respectifs.